# Europäisches Patentamt

# European Patent Office

# Office européen des brevets

(19)

(11) Veröffentlichungsnummer: **0 115 741**
**B1**

(12)

# EUROPÄISCHE PATENTSCHRIFT

(45) Veröffentlichungstag der Patentschrift:
13.08.86

(51) Int. Cl.⁴: **G 01 L 1/10**

(21) Anmeldenummer: **83810045.1**

(22) Anmeldetag: **04.02.83**

(54) Massen- und Kraftmessgerät.

(43) Veröffentlichungstag der Anmeldung:
**15.08.84 Patentblatt 84/33**

(45) Bekanntmachung des Hinweises auf die Patenterteilung:
**13.08.86 Patentblatt 86/33**

(84) Benannte Vertragsstaaten:
**AT BE CH DE FR GB IT LI NL SE**

(56) Entgegenhaltungen:
**CH-A-533 299**
**US-A-3 621 713**

(73) Patentinhaber: **K-TRON Patent AG, Limmatquai 3, CH- 8001 Zürich (CH)**

(72) Erfinder: **Saner, Kaspar, Krummacker 2, CH- 8600 Dübendorf (CH)**

(74) Vertreter: **Eder, Carl E., Patentanwaltsbüro EDER AG Münchensteinerstrasse 2, CH- 4052 Basel (CH)**

EP 0 115 741 B1

LIBER, STOCKHOLM 1986

## Beschreibung

Die vorliegende Erfindung bezieht sich auf ein Massen- und Kraftmessgerät mit zwei Dynamometern, bei welchem die zu messende Grösse auf mindestens ein Dynamometer einwirkt und mit dem Gewicht einer ebenfalls auf mindestens ein Dynamometer einwirkenden Referenzmasse zwecks Ermittlung dieser Grösse verglichen wird, welche Referenzmasse mit einem um eine horizontale Achse auf dem Gestell des Gerätes schwenkbar gelagerten Hebel mittels einer Führung verbunden ist, die sie mit elastischer Rückstellkraft horizontal und parallel führt.

Solche Geräte sind z.B. aus dem US Patent 3.621.713 bekannt. In diesem Patent dienen zur Führung der Referenzmasse zwischen ihr und dem Hebel angeordnete Lenker. In der Praxis haben sich solche Mittel als umständlich und manchmal unzuverlässig erwiesen, da sie aus einzelnen, zusammenwirkenden Teilen bestehen.

Die der Erfindung zu Grunde liegende Aufgabe besteht darin, die Referenzmasse dem oben genannten Hebel gegenüber mit herstellungstechnisch einfachen und im Betrieb zuverlässigen Mitteln in horizontaler Richtung, d.h. mit zwei Freiheitsgraden elastisch und parallel zu führen.

Erfindungsgemäss erfolgt dies dadurch, dass die genannte Führung aus einer senkrechten, an einem Ende am genannten Hebel eingespannten Blattfeder und aus mindestens einem äusseren, starren, an der Referenzmasse eingespannten Arm und mindestens einem inneren, starren Arm besteht, die parallel zueinander liegen und mittels zweier paralleler, elastischer, blattförmigen Lenkern verbunden sind, wobei das andere Ende der Blattfeder am inneren Arm eingespannt ist. Diese Ausbildung erlaubt es, die Referenzmasse, die Führung und den Hebel in Monoblock-Bauart auszuführen.

In der beiligenden Zeichnung ist ein Ausführungsbeispiel des Erfindungsgegenstandes schematisch dargestellt.

Es zeigen:

Fig. 1 einen Aufriss der Referenzmasse und ihrer Führung,

Fig. 2 einen Grundriss gemäss Fig. 1, bei welchem das Gestell nicht dargestellt ist,

Fig. 3 einen Vertikalschnitt durch die Referenzmasse, und

Fig. 4 eine Variante.

In der Zeichnung sind lediglich die zum Verständnis der Erfindung notwendigen Elemente dargestellt. Auf dem Gestell 1 des Massen- und Kraftmessgerätes ist ein horizontaler Winkelhebel 2 mittels Kreuzgelenken 3 schwenkbar gelagert. An diesem Winkelhebel 2 ist eine Referenzmasse 4 mittels einer elastischen Führung 5 angebracht. Der Winkelhebel 2 weist ferner einen Stift 6 auf, an welchem ein als Uebertragungsorgan dienender Draht 7 befestigt ist, dessen rechtes Ende in nicht dargestellter Weise mit einem oder beiden Dynamometern des Gerätes in bekannter Weise verbunden ist. Die auf den Draht 7 ausgeübte Zugkraft wird als Mass für die Referenzmasse auf das nicht dargestellte Mess-System übertragen.

Die Führung 5 der Referenzmasse 4 besteht aus zwei Teilen. Der erste Teil besteht aus einer senkrechten Blattfeder 8, die an ihrem rechten Ende am horizontalen Arm des Winkelhebels 2 eingespannt befestigt ist. Sie ist in vertikaler Richtung starr und in horizontaler Richtung biegsam. Der zweite Teil weist eine T-förmige und zwei viereckige Ausnehmungen 9, 10 bzw. 11 auf. Dadurch werden zwei äussere, horizontale starre Arme 12 und zwei innere horizontale, starre Arme 13 gebildet, die paarweise je von zwei, ebenfalls horizontalen, zwischen ihnen eingespannten, blattförmigen Lenkern 14 verbunden sind. Die Arme 13 haben ein gemeinsames Endstück. Das linke Ende der Blattfeder 8 ist an diesem Endstück eingespannt befestigt. Die Lenker 14 sind senkrecht zu den Armen 12, 13 und zur Blattfeder 8 angeordnet.

Das Ganze ist derart bemessen, dass der Schwerpunkt 15 des aus der Referenzmasse 4, Führung 5 und Winkelhebel 2 bestehenden Gebildes in der horizontalen Ebene 16 liegt, die durch den Mittelpunkt der Kreuzgelenke 3 verläuft.

Ferner weist die Referenzmasse 4 drei vertikale, zylindrische Bohrungen 17, 18 und 19 auf. Die Achse der Bohrung 17 verläuft im wesentlichen durch den Schwerpunkt 15. Am Gestell 1 ist ein zylindrischer Anschlag 20 vorgesehen, der sich in die Bohrung 17 erstreckt und vorzugsweise auf der Höhe des Schwerpunktes 15 liegt. Dieser Anschlag 20 ist mittels einer Schraube 21 in horizontaler Richtung ein- und feststellbar. Die Bohrung 18 weist eine untere und die Bohrung 19 eine obere Schulterfläche 22 bzw. 23 auf. Eine Schraube 24, deren Kopf 25 genau bearbeitet ist und deren Höhenlage einstellbar ist, dient als doppelseitiger Anschlag bei senkrechten Bewegungen.

Die beschriebene Führung 5 wirkt wie folgt: Der Winkelhebel 2, die Führung 5 und die Referenzmasse 4 sind nur dadurch in horizontaler Lage gehalten, dass der Draht 7 sie in dieser Lage hält. Das andere, nicht dargestellte Ende dieses Drahtes 7 ist in bekannter Weise an dem Mess-System des Gerätes angeschlossen, das seinerseits am Gestell 1 befestigt ist. Wenn auf die Referenzmasse 4 Störkräfte in Richtung der Achse 16 einwirken, so verformen sich die Lenker 14 S-förmig, sodass die Referenzmasse 4 sich in Richtung der Achse 16 versetzt. Wenn Störkräfte in Richtung der Achse 26 auf die Referenzmasse 4 einwirken, so dreht sie sich um die vertikale, durch die Mitte der Blattfeder 8 verlaufenden Achse 27. Im ersten Fall bleibt die Blattfeder 8 von der Störkraft unberührt, im zweiten Fall sind es die Lenker 14, die von der Störkraft unberührt bleiben. In beiden Fällen bestimmt der Anschlag 20 die zulässige Amplitude der horizontalen Bewegung der Referenzmasse 4. Nach Rückgang der Störkräfte bringt die elastische Führung 5 die Referenzmasse 4 in ihre ursprüngliche Lage zurück. Der vom Kopf 25 der Schraube 24 gebildete Anschlag wirkt mit den Schulterflächen 22 und 23 um allfällige senkrechte Bewegungen der Referenzmasse 4 zu beschränken, da der Anschlag 20 nur in horizontaler Richtung wirksam ist. Solche senkrechte Bewegungen können daher entstehen, dass der Draht 7, bzw. das Mess-System an welchem er angeschlossen ist, eine mässige Nachgiebigkeit aufweist. Wird der Draht 17 senkrecht statt horizontal geführt, so wird selbstverständlich der Stift 6 waagrecht und zwar koaxial mit der Achse 16 angeordnet.

Das dargestellte Ausführungsbeispiel kann in Monoblock-Bauart ausgeführt werden. Der Hebel, die Führung und die Referenzmasse können z.B. als ein einziges Gußstück oder durch Fräsen eines Metallstückes hergestellt werden.

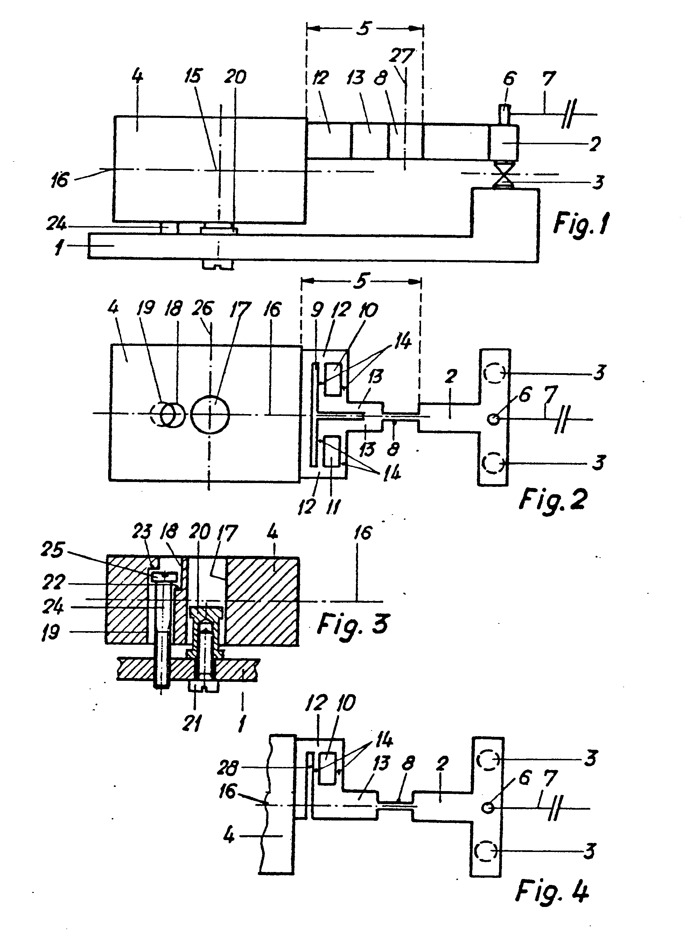

In Fig. 4 ist eine Variante dargestellt. Sie besteht darin, dass der zweite Teil der Führung 5 nur einen äusseren Arm 12 und einen inneren Arm 13 aufweist. Die T-förmige Ausnehmung ist durch eine einfache, längliche Ausnehmung 28 ersetzt. Die Wirkungsweise dieser Variante ist die gleiche wie oben beschrieben.

## Patentansprüche

1. Massen- und Kraftmessgerät mit zwei Dynamometern, bei welchen die zu messende Grösse auf mindestens ein Dynamometer einwirkt und mit dem Gewicht einer ebenfalls auf mindestens ein Dynamometer einwirkenden Referenzmasse (4) zwecks Ermittlung dieser Grösse verglichen wird, welche Referenzmasse mit einem um eine horizontale Achse auf dem Gestell (1) des Gerätes schwenkbar gelagerten Hebel (2) mittels einer Führung (5) verbunden ist, die sie mit elastischer Rückstellkraft horizontal und parallel führt, dadurch gekennzeichnet, dass die genannte Führung (5) aus einer senkrechten, an einem Ende am genannten Hebel (2) eingespannten Blattfeder (8) und aus mindestens einem äusseren, starren, an der Referenzmasse (4) eingespannten Arm (12) und mindestens einem inneren, starren Arm (13) besteht, die parallel zueinander liegen und mittels zweier paralleler, elastischer, blattförmiger Lenker (14) verbunden sind, wobei das andere Ende der Blattfeder (8) am inneren Arm (13) eingespannt ist.

2. Massen- und Kraftmessgerät nach Anspruch 1, dadurch gekennzeichnet, dass der Schwerpunkt des aus der Referenzmasse (4), ihrer Führung (5) und dem Hebel (2) bestehenden Gebildes in der horizontalen Ebene liegt, die durch die Schwenkachse des Hebels verläuft.

3. Massen- und Kraftmessgerät nach Anspruch 2, dadurch gekennzeichnet, dass die Referenzmasse (4) eine senkrechte, zylindriche Bohrung (17) aufweist, durch welche sich ein am Gestell (1) in vertikaler Richtung ein- und feststellbar befestigter, zylindrischer Anschlag (20) erstreckt.

## Claims

Apparatus for measuring masses and forces and comprising two dynanometers, in which apparatus the quantity to be measured acts upon at least one dynamometer and is compared to the weight of a reference mass (4) similarly acting upon at least one dynamometer, the purpose being the measurement of said quantity, said reference mass being connected - by way of a guide bracket (5) to a lever (2) supported on the apparatus frame (1) pivotably around a horizontal axis, said guide bracket being adapted to guide the reference mass along a horizontal and parallel path by the action of an elastic return force, characterized in that the guide bracket (5) consists of a vertical leaf spring (8) rigidly fastened at its one end to said lever (2), at least one rigid outer arm (12) rigidly fastened to the reference mass (4) and at least one rigid inner arm (13), the latter two arms (12, 13) being disposed parallel to each other and connected with each other by means of two parallel elastic leaf-shaped control levers (14), the other end of the leaf spring (8) being rigidly fastened to the inner arm (13).

2. Apparatus for measuring masses and forces as claimed in claim 1, characterized in that the center of gravity of the configuration consisting of the reference mass (4), its guide bracket (5) and the lever (2) lies in the horizontal plane that passes through the pivot axis of the lever.

3. Apparatus for measuring masses and forces as claimed in claim 2, characterized in that the reference mass (4) comprises a vertical cylindrical bore (17), through which a cylindrical stop member (20), mounted adjustably and fastenably relative to the frame (1), is arranged to extend.

## Revendications

1. Appareil pour mesurer des masses et des forces, muni de deux dynamomètres et dans lequel la grandeur à mesurer agit sur au moins un dynamomètre et est comparée au poids d'une masse de référence (4) agissant également sur au moins un dynamomètre, en vue de la détermination de cette grandeur, ladite masse de référence étant reliée, au moyen d'un guide (5), à un levier (2) monté pivotant, autour d'un axe horizontal, sur le bâti (1) de l'appareil, guide qui dirige la masse de référence à l'horizontale et en parallèle à l'encontre d'une force de rappel élastique, caractérisé en ce que ledit guide (5) est constitué par une lame-ressort verticale (8) solidarisée, par une première extrémité, audit levier (2) ainsi que par au moins une branche extérieure rigide (12) solidarisée à la masse de référence (4) et au moins une branche intérieure rigide (13), qui sont mutuellement parallèles et sont reliées l'une à l'autre au moyen de deux bras oscillants (14) élastiques, parallèles et en forme de lames, la seconde extrémité de la lame-ressort (8) étant solidarisée à la branche intérieure (13).

2. Appareil pour mesurer des masses et des forces selon la revendication, caractérisé en ce que le centre de gravité de l'ensemble formé par la masse de référence (4), son guide (5) et le levier (2) est situé dans un plan horizontal qui passe par l'axe de pivotement du levier.

3. Appareil pour mesurer des masses et des forces selon la revendication 2, caractérisé en ce que la masse de référence (4) comporte un alésage cylindrique vertical (17) dans lequel s'étend une butée cylindrique (20) fixée au bâti (1), dans la direction verticale, et apte à être immobilisée dans une position ajustable.

Fig. 1

Fig. 2

Fig. 3

Fig. 4